Europäisches Patentamt

European Patent Office

Office européen des brevets

(19)

(11) Numéro de publication : **0 522 911 A1**

## (12) DEMANDE DE BREVET EUROPEEN

(21) Numéro de dépôt : **92401753.6**

(22) Date de dépôt : **23.06.92**

(51) Int. Cl.$^5$ : **G02F 1/37**, G02F 1/39

(30) Priorité : **09.07.91 FR 9108604**

(43) Date de publication de la demande :
**13.01.93 Bulletin 93/02**

(84) Etats contractants désignés :
**DE FR GB IT**

(71) Demandeur : **THOMSON-CSF**
**51, Esplanade du Général de Gaulle**
**F-92800 Puteaux (FR)**

(72) Inventeur : **Debuisschert, Thierry**
**THOMSON-CSF, SCPI, Cédex 67**
**F-92045 Paris la Défense (FR)**
Inventeur : **Pocholle, Jean-Paul**
**THOMSON-CSF, SCPI, Cédex 67**
**F-92045 Paris la Défense (FR)**
Inventeur : **Papuchon, Michel**
**THOMSON-CSF, SCPI, Cédex 67**
**F-92045 Paris la Défense (FR)**

(74) Mandataire : **Guérin, Michel et al**
**THOMSON-CSF SCPI B.P. 329**
**F-92402 COURBEVOIE CEDEX (FR)**

(54) **Dispositif d'optique non linéaire.**

(57) L'invention concerne un dispositif d'optique non linéaire dans lequel le milieu non linéaire comporte une surface circulaire sur laquelle vient se réfléchir le faisceau lumineux à traiter.

Une telle structure permet de résoudre les difficultés de réalisation des miroirs de la cavité contenant le milieu non linéaire.

Applications :
Doublage de fréquence
Oscillateurs paramétriques

FIG.6

EP 0 522 911 A1

L'invention concerne un dispositif d'optique non linéaire et notamment un dispositif comportant un milieu non linéaire compris dans une cavité résonante et couplé à un faisceau laser.

Beaucoup de dispositifs classiques utilisant l'optique non linéaire (oscillateurs paramétriques optiques, doubleurs de fréquence), sont constitués de deux éléments essentiels : d'une part le milieu non linéaire et d'autre part une cavité résonante. Celle-ci permet, dans le cas du doublage de fréquence, d'augmenter le rendement de conversion, et dans le cas de l'oscillateur paramétrique optique (O.P.O.) de produire des faisceaux de type laser et de fréquence réglable. Dans le cas le plus simple, la cavité est constituée de deux miroirs concaves dont les faces sont traitées de manière à avoir un coefficient de réflexion élevé pour le domaine de longueur d'onde utile. Les traitements de ces miroirs sont constitués par des empilements de couches diélectriques. Ils constituent généralement l'une des limitations essentielles des systèmes non linéaires pour les raisons suivantes :

- Il est difficile de fabriquer des miroirs hautement réfléchissants sur une large bande spectrale (utilisation pour l'O.P.O.). La complexité du traitement nécessaire rend le miroir fragile et abaisse son seuil de dommage ce qui limite la puissance admissible dans la cavité et la focalisation des faisceaux.

- Il est difficile de contrôler très précisément les coefficents de réflexion des miroirs lors de la fabrication. De plus, si l'on veut optimiser le coefficient de surtension de la cavité pour l'application envisagée, il faut disposer d'une série de miroirs de transmissions différentes, ce qui augmente les coûts.

- Les miroirs sont réalisés sur des substrats qui doivent être le plus transparents possible dans la zone de longueur d'onde utile. Outre les difficultés de réalisation pour certains de ces substrats, ils présentent souvent des absorptions résiduelles dues à des impuretés présentes à l'état de traces (liaisons O-H par exemple), et qui rendent les miroirs inutilisables aux longueurs d'onde qui correspondent à ces absorptions.

- Il est difficile de réaliser des miroirs ayant de bons coefficients de réflexion dans le domaine des courtes longueurs d'onde (U.V.) alors que l'on dispose de cristaux non-linéaires transparents dans cette gamme.

- Lorsque le cristal est placé dans la cavité, il est nécessaire que ses deux faces soient traitées anti-reflet afin de limiter les pertes accidentelles responsables dans le cas de l'O.P.O. d'une élévation du seuil d'oscillation. Les traitements ont généralement des seuils de dommage moins élevés que celui du cristal luimême et sont donc une limitation à l'utilisation optimale de celui-ci.

Ces inconvénients font qu'il est intéressant de rechercher une configuration de cavité résonante où les miroirs et les traitements multidiélectriques sont supprimés.

L'invention fournit une solution qui permet de résoudre ces problèmes.

L'invention concerne donc un dispositif d'optique non linéaire comportant un milieu en matériau non linéaire caractérisé en ce que le matériau non linéaire comporte des moyens de couplage optique permettant à un faisceau de pénétrer et de sortir en un point déterminé du milieu non linéaire, le faisceau se réfléchissant dans le milieu non linéaire plusieurs fois sur les parois de ce milieu non linéaire avant d'en ressortir.

Les différents objets et caractéristiques de l'invention apparaîtront plus clairement dans la description qui va suivre et dans les figures annexées qui représentent :

- la figure 1, un exemple de réalisation du dispositif selon l'invention ;
- la figure 2, un exemple de réalisation selon l'invention dans lequel le milieu non linéaire est cylindrique ;
- la figure 3, une variante du dispositif selon l'invention ;
- les figures 4 et 5, un exemple de fonctionnement du dispositif de l'invention en doublage et sommation successifs de fréquence ;
- les figures 6 et 7, des moyens de couplage des faisceaux extérieurs à la cavité constituée par le milieu non linéaire ;
- les figures 8 et 9, le fonctionnement du dispositif de l'invention ;
- les figures 10a et 10b, une variante de réalisation du dispositif selon l'invention ;
- les figures 11 et 13, des modes de fonctionnement différents possibles du dispositif selon l'invention ;
- la figure 12, une modélisation du fonctionnement ;
- les figures 14 à 16, des variantes de réalisation de l'invention.

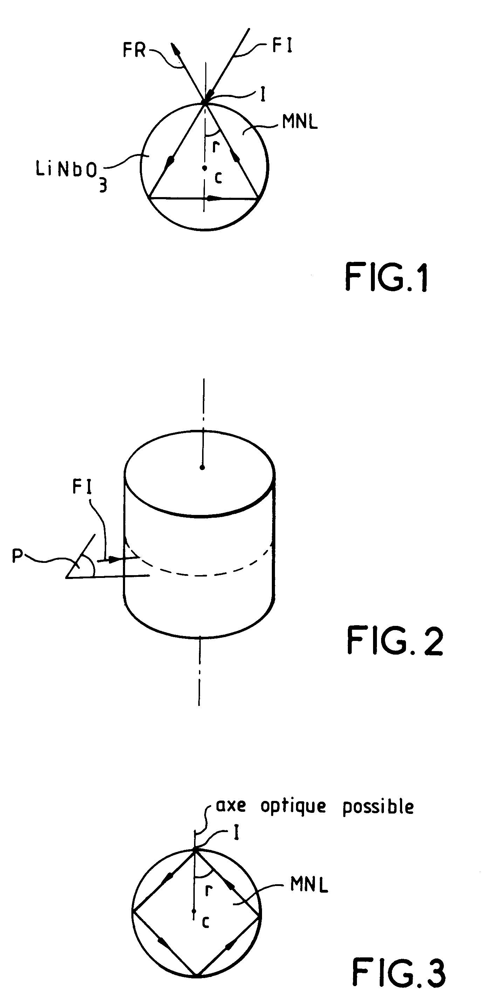

L'arrangement général de l'invention consiste en un milieu non linéaire MNL comportant une section plane de forme circulaire telle que représentée en figure 1. Le milieu MNL a un indice de réfraction supérieur au milieu ambiant dans lequel il se trouve. Un faisceau incident FI entre en un point I dans le milieu non linéaire selon une direction contenue dans le plan de la section plane. Ce faisceau possède un angle d'incidence tel qu'il se réfléchit à l'intérieur du milieu MNL et il est tel qu'après plusieurs réflexions successives un faisceau réfléchi FR ressorte de la sphère au point I.

Le milieu non linéaire MNL peut être un cylindre et la direction du faisceau incident est donc comprise dans un plan perpendiculaire à l'axe du cylindre (figure 2).

Le milieu non linéaire MNL peut également être une sphère. Dans ce qui suit, nous décrivons l'invention de façon plus précise en prenant l'exemple de la sphère.

Le principe de base est d'utiliser le matériau à la fois comme milieu non-linéaire et comme cavité résonante, les miroirs étant remplacés par une réflexion totale sur les dioptres.

Pour réaliser la sphère on prend par exemple un matériau classique comme le niobate de lithium ($LiNbO_3$). L'indice ordinaire à 1,06 $\mu$m vaut $n_o$ = 2,23. L'angle de réflexion totale donné par l'expression :

$$\sin r = 1/n$$

vaut r = 26,6°

Si l'on considère une sphère de matériau, plusieurs configurations de cavité sont envisageables. La première, utilise trois réflexions totale pour un tour de cavité comme cela est représenté en figure 1.

L'angle r valant 30°, on est bien en régime de réflexion totale.

Une deuxième configuration représentée en figure 3 utilise quatre réflexions sur la surface extérieure de la sphère, l'angle r valant 45°.

Cette configuration peut être utilisée si le matériau non linéaire a un indice inférieur à 2, auquel cas, l'angle de réflexion totale est supérieur à 30°. Des configurations avec un nombre plus important de réflexions peuvent être envisagées.

Il faut remarquer que la sphère étant parfaitement sphérique, la propagation du faisceau s'effectue automatiquement dans un plan. Il est donc facile de faire coïncider le faisceau après un tour complet dans la sphère au point I avec le faisceau incident FI.

Outre le fait de supprimer complètement les miroirs et les traitements multi-diélectriques, cette configuration présente plusieurs avantages :

- Toute la cavité est remplie de milieu actif, ce qui est une amélioration par rapport aux systèmes classiques où une partie de la propagation s'effectue dans l'air.

- La propagation s'effectue automatiquement en anneau, ce qui dans le cas de l'O.P.O. donne un seuil d'oscillation plus bas que pour une cavité linéaire.

- L'utilisation d'une sphère simplifie la fabrication par rapport aux systèmes présentant des faces ayant des rayons de courbures différentes. De plus, dans le cas d'une sphère, il n'y a pas à spécifier une orientation particulière de l'axe optique lors de la fabrication. L'orientation de l'axe optique peut être effectuée par l'utilisateur. Une même sphère peut donc être utilisée pour de multiples applications (O.P.O., doublage, sommation, etc) nécessitant des angles d'accord de phases différents.

- Le trajet du faisceau dans la sphère est divisé en plusieurs parties d'orientation différentes. On peut envisager des configurations où l'axe optique du matériau de la sphère est orienté de manière à ce qu'à ces orientations différentes correspondent à des opérations non linéaires différentes.

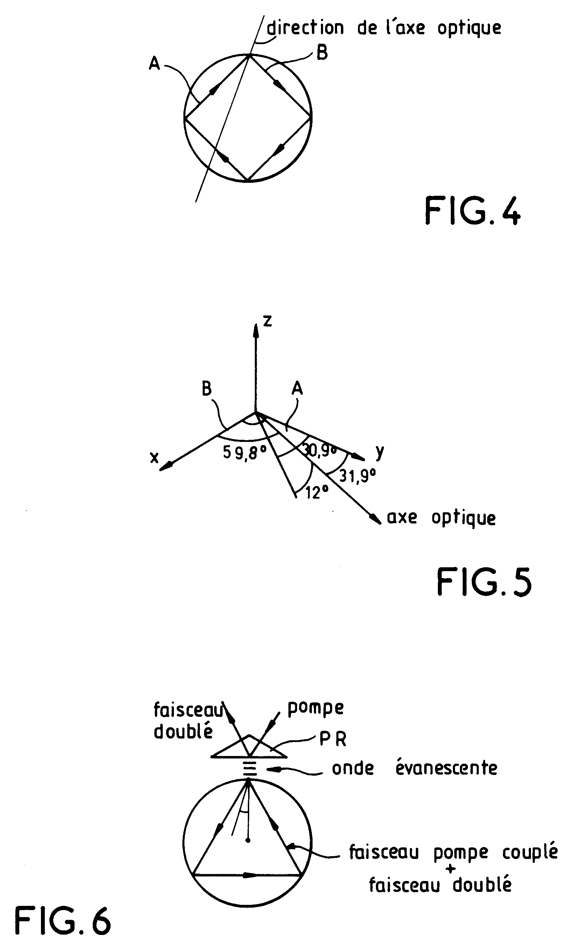

En prenant l'exemple du matériau non linéaire en $BaB_2O_4$ (BBO), deux processus successifs peuvent être envisagés. Le premier est le doublage d'un faisceau de pompe à 1,06 $\mu$m pour engendrer un faisceau à 532 nm (phase matching de type II tel que décrit dans le document D. EIMERL, L. DAVIS, S. VELSKO, E.K. GRAMAM, A. ZALKIN, J. Appl. Phys. 62 (5), 1er Septembre 1987, p. 1968 ; angle : 32,9°). Le deuxième est la sommation de fréquence entre le faisceau à 1,06 $\mu$m et celui à 532 nm pour engendrer un faisceau à 355 nm (phase matching de type III tel que décrit dans le document précédent D. EIMERL et al ; angle : 59,8°). La somme de ces deux angles est 92,7°. On voit donc que si l'on choisit un trajet à quatre réflexions (figure 4), on peut orienter le cristal pour que deux parties de trajet successives soient accordées : la première (trajet A) pour le doublage, la seconde (trajet B) pour la sommation de fréquence.

Comme cela est représenté en figure 5, il suffit que l'axe optique fasse un angle de 12° avec le plan de propagation et que sa projection sur ce dernier fasse un angle de 30,9° avec le trajet A pour que les deux conditions d'accord de phase soient simultanément vérifiées.

Comme l'angle entre l'axe optique et le plan de propagation est faible, les directions des polarisations ordinaires (perpendiculaire à l'axe optique et au vecteur d'onde) sont proches pour les trajets A et B. L'essentiel du faisceau de pompe polarisé selon la direction ordinaire pour le trajet A reste polarisé selon la direction ordinaire pour le trajet B. Il en va de même pour l'onde à fréquence double qui reste elle essentiellement polarisée selon la direction extraordinaire. L'essentiel de la pompe à 1,06 $\mu$m et du faisceau créé par doublage à 532 nm est donc utilisable pour la sommation de fréquence.

Dans le cas du couplage du YAG à 1,06 $\mu$m dans le $LiNbO_3$, l'indice ordinaire à la longueur d'onde du faisceau pompe est $n_o$ = 2,23 et l'angle de réflexion totale r = 26,6°. Comme l'angle r doit être au minimum de 30° pour la configuration à trois réflexions, il n'est pas possible de coupler la pompe par réfraction, même en incidence rasante. On peut utiliser un prisme à réflexion totale PR (figure 6). C'est l'onde évanescente qui existe entre le prisme et la sphère qui assure le couplage.

Si le prisme a même indice que la sphère, l'angle d'incidence du faisceau de pompe sur la face de couplage du prisme est le même que l'angle d'incidence du faisceau couplé dans la sphère avec la face de couplage de celle-ci.

Ce coupleur permet de faire entrer la pompe, mais sert aussi de coupleur de sortie pour le signal. On a une cavité en anneau avec un seul coupleur d'entrée sortie. En jouant sur la distance entre le prisme et la sphère, on peut régler la transmission du coupleur, et donc la finesse de la cavité équivalente. On peut ainsi optimiser les pertes pour une expérience de réduction des fluctuations quantiques de la lumière par exemple ("squeezing", en terminologie anglo-saxonne).On peut également optimiser le rendement de conversion dans le cas du doublage.

Ce coupleur présente néanmoins un inconvénient. Il n'est pas possible de régler séparément les coefficients de couplage pour la pompe et le faisceau à fréquence double. Si le coefficient de réflexion est élevé pour l'un des deux champs, il l'est également pour l'autre. Si l'on veut réaliser une cavité résonante, il faut envisager qu'elle le soit pour les deux champs simultanément, et donc que les deux champs soient déphasés d'un nombre entier de fois $2\pi$ après un tour dans la cavité.

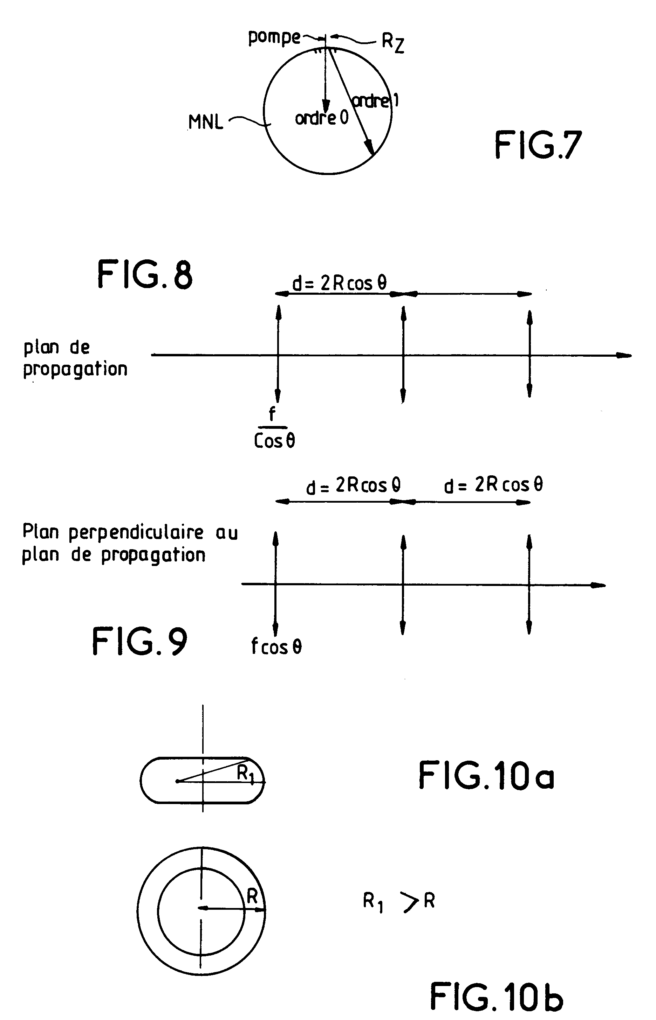

Un autre moyen représenté en figure 7, de coupler le faisceau de pompe dans la sphère consiste à graver un réseau RZ sur sa surface. Les ordres élevés du faisceau de pompe diffracté peuvent alors être couplés dans la sphère.

Il est préférable que la surface vue par le faisceau à chaque réflexion sur les parois du milieu non linéaire MNL soit sphérique et non cylindrique. Le faisceau voit ainsi un miroir concave à chaque réflexion, ce qui assure sa focalisation.

On peut décomposer la cavité en une succession de miroirs de focale f = R/2 séparés par une distance d qui est toujours strictement inférieure au diamètre. Même dans la configuration à trois réflexions, l'angle d'incidence des faisceaux sur la face est important ($\Theta = 30°$). Il y a donc un fort effet d'astigmatisme. Pour en tenir compte, il faut décomposer la cavité en deux, l'une dans le plan de propagation (voir figure 8) où la focale des miroirs vaut f/cos $\Theta$ ; l'autre dans le plan perpendiculaire au plan de propagation (voir figure 9) où les focales diminuent et valent f cos $\Theta$. La distance séparant deux miroirs est d = 2R cos $\Theta$.

La cavité dans le plan perpendiculaire au plan de propagation a un comportement analogue à celui d'une cavité linéaire formée de deux miroirs concaves dont les centres sont confondus. Elle est en limite de la zone de stabilité. Ceci peut être un inconvénient majeur si l'on veut utiliser la sphère comme résonateur. Pour y remédier, on peut envisager d'utiliser non plus une sphère, mais un cylindre dont un côté a une forme convexe et de rayon de courbure $R_1$ supérieur au rayon du disque afin de compenser l'astigmatisme et rendre la cavité stable.

Si le faisceau de pompe utilisé est lui-même astigmate (diode laser), on peut laisser subsister une partie de l'astigmatisme de la cavité pour que le mode propre de la cavité ait le même astigmatisme que le faisceau de pompe.

A titre d'exemple, l'invention va maintenant être décrite avec un milieu non-linéaire en niobate de lithium ($LiNbO_3$).

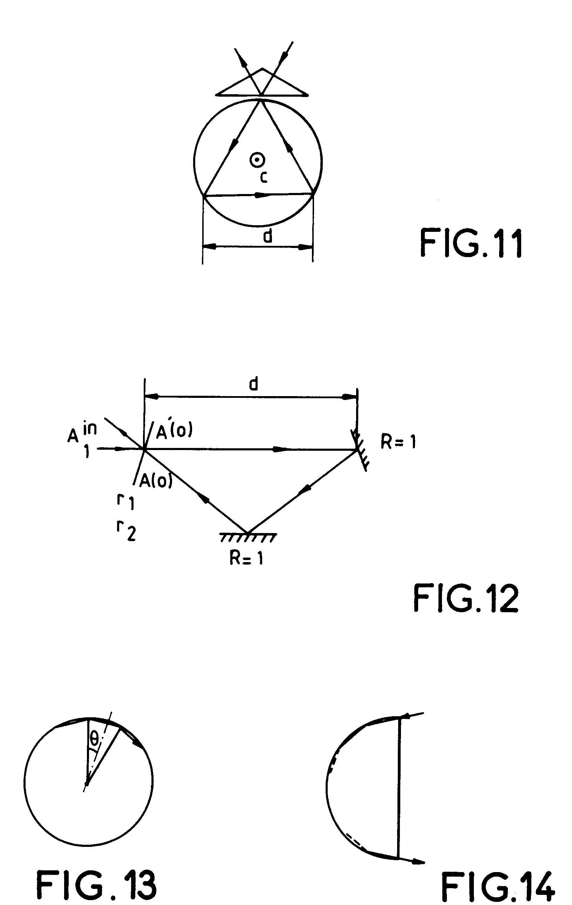

Dans le niobate de lithium, la différence entre l'indice extraordinaire et l'indice ordinaire est trop faible à température ambiante pour obtenir l'accord de phase entre 1,06 $\mu$m et 532 nm. Pour le réaliser, il faut se propager dans un plan perpendiculaire à l'axe c (figure 11) afin de maximiser la différence entre l'indice ordinaire et l'indice extraordinaire, puis chauffer le cristal afin de l'augmenter. On obtient ainsi le doublage autour de 120°C.

Nous considérons la configuration à trois réflexions, et un axe optique perpendiculaire au plan de propagation.

Nous schématisons le résonateur par une cavité en anneau à trois miroirs avec un seul miroir de couplage (figure 12). L'amplitude du champ avant réflexion sur un miroir est notée A, et A' juste après la réflexion. Nous considérons qu'un seul champ entre dans la cavité, le champ pompe noté $A^{in}_1$.L'indice 1 se rapporte au champ pompe, l'indice 2 au champ signal créé par doublage de fréquence. L'origine des positions est prise au niveau du coupleur. La distance séparant deux miroirs vaut d.

Entre deux miroirs, les champs pompe et signal subissent des déphasages dûs à la propagation égaux respectivement à $k_1d$ et $k_2d$.

$k_1$ est le vecteur d'onde pour le champ $A_1$.

$k_2$ est le vecteur d'onde pour le champ $A_2$.

A la réflexion ils subissent des déphasages égaux respectivement à $\phi_1$ et $\phi_2$. Ces déphasages prennent des valeurs entre O et $\pi$ et dépendent de l'angle d'incidence. Le champ pompe est polarisé selon la direction ordinaire pour pouvoir satisfaire la condition d'accord de phase. Il est donc perpendiculaire à la direction de propagation et perpendiculaire à l'axe optique. Dans la configuration que nous considérons, il est donc dans le plan d'incidence : c'est donc un mode TM. Si nous considérons que le milieu extérieur est l'air, son déphasage à la réflexion est :

$$\phi_m = 2\,\mathrm{arctg}\left(n\sqrt{\frac{n^2\sin^2\Theta - 1}{\cos^2\Theta}}\right)$$

où $\Theta$ est l'angle d'incidence supposé supérieur à l'angle de réflexion totale.

Le champ signal est quant à lui polarisé selon la direction extraordinaire. Il est perpendiculaire au plan d'incidence ; c'est un mode TE. Son déphasage à la réflexion s'écrit :

$$\phi_e = 2 \arctan \left(\frac{\sqrt{n^2 \sin^2 \Theta - 1}}{n \cos \Theta}\right)$$

Les équations des champs sur le miroir de couplage sont

$$A'_1(0) = t_1 A_1^{in} + r_1 A_1(0) e^{\phi 1} \quad \left(r_1^2 + t_1^2 = 1\right)$$

$$A'_2(0) = r_2 A_2(0) e^{i\phi 2}$$

où

$r_1$ et $r_2$ sont les coefficients de réflexion du miroir

$t_1$ et $t_2$ sont les coefficients de transmission du miroir.

L'amplitude du champ créé par effet non-linéaire entre le miroir de couplage et le miroir situé à la distance d de celui-ci est :

$$A_2(d) = \left[A'_2(0) + \chi d A'^2_1(0) e^{\frac{i\Delta kd}{2}} \sin\left(\frac{\Delta kd}{2}\right)\right] e^{ik_2 d}$$

- $\Delta kd = (2k_1 - k_2)d$ est l'écart à la condition d'accord de phase.

- $\chi$ est le coefficent non linéaire.

Deux effets entrent en jeu dans l'expression du champ $A_2(0)$ dans la cavité : d'une part la conversion non linéaire, d'autre part les conditions de résonance des faisceaux pompe et signal. Comme nous utilisons un coupleur par onde évanescente, il est difficile de contrôler le couplage d'un des deux champs indépendamment de l'autre. Il est donc nécessaire de rechercher la condition de résonance pour les deux champs simultanément.

L'écart à la condition d'accord de phase peut être réglé continûment autour de la valeur nulle. On peut par exemple jouer sur la température du cristal. Une manière de satisfaire à la condition de résonance pour les deux champs et d'optimiser le couplage non linéaire est de régler $\Delta k$ pour que :

$$2\phi_1 + 2k_1 d = \phi_2 + k_2 d$$

Le déphasage subi par le champ signal (propagation sur une distance d plus une réflexion) est le double de celui subi par le champ de pompe. Si le champ pompe est résonant sur un tour de cavité ($3(\phi_1 + k_1 d) = 2k\pi$), le champ signal l'est automatiquement ($3(\phi_2 + k_2 d) = 4k\pi$). Pour régler la cavité à résonance, on modifie la longueur optique totale de la cavité de l'ordre d'une longueur d'onde de pompe. Ceci peut être obtenu par une variation de la longueur géométrique au moyen d'une cale piézoélectrique, ou par une variation d'indice par effet électro-optique.

La seule limitation de ce type de réglage vient de ce que $\Delta k$ est non nul, et donc que sinc ($\Delta kd/2$) est inférieur à 1, ce qui diminue l'efficacité de conversion.

Considérons une configuration à trois réflexions : l'angle d'incidence vaut alors $\Theta \sim 30°$. Dans le cas du doublage à 1,06 µm dans le LiNbO₃, les indices vus par le faisceau pompe et par le faisceau signal sont quasiment identiques :

$$n(532 \text{ nm}) \sim n_o (1,064 \text{ µm}) = 2,23$$

Le champ pompe étant TM et le champ signal TE, on obtient pour les déphasages :

$$\phi_1 = \phi_m = 104°$$
$$\phi_2 = \phi_e = 29°$$

d'où $2\phi_1 - \phi_2 = 179° = 3,12$ rad

Dans ce cas, on a : $\Delta kd = 3,12$

$$\text{et sinc} \left( \frac{\Delta kd}{2} \right) = 0,64$$

Cette diminution du couplage reste modérée. La longueur effective du cristal vaut alors :

$$l_{eff} = 0,64 \times 3d = 1,92\ d$$

Alors qu'elle vaudrait d si un seul des trajets vérifiait la condition d'accord de phase dans le cristal. De plus, la cavité peut être rendue résonante pour le signal, ce qui revient à augmenter la longueur effective du cristal, et ce d'autant plus que la finesse est élevée.

Connaissant la valeur que doit prendre $\Delta kd$, on peut déduire la valeur nécessaire de l'écart entre les indices de pompe $n_1$ et $n_2$ :

$$n_1 - n_2 = \frac{\lambda_p}{4\pi d} (\Delta kd)$$

Si l'on considère une bille de diamètre 3 mm, d vaut 2,6 mm. On obtient alors :

$$n_1 - n_2 = -10^{-4}$$

Cela correspond à une variation de l'ordre du degré par rapport à la température d'accord de phase.

A titre d'exemple on va également décrire le fonctionnement du système de l'invention avec un milieu non linéaire en $LiNbO_3$ fonctionnant en doubleur à 820 nm.

Dans le cas du $LiNbO_3$, l'accord de phase ne peut pas être obtenu par biréfringence si l'on veut doubler un faisceau à 820 nm. L'écart entre les indices est trop élevé ($n_o(0,82\ \mu)) = 2,25$, $n_e(0,41\ \mu) = 2,32$). Comme nous l'avons vu dans le paragraphe précédent, l'efficacité du doublage dépend du terme $\Delta kd$. Dans ce cas, pour compenser la valeur élevée de $\Delta kd$ due à la grande différence d'indices, il suffit de diminuer la valeur de d, c'est-à-dire la longueur du trajet entre deux réflexions successives. Cela nécessite d'augmenter le nombre de réflexions.

On démontre comment on peut obtenir la relation :

$$\Delta kd = -(2\phi_1 - \phi_2) \quad (a)$$

L'angle d'incidence du faisceau sur le dioptre peut être quasiment égal à $\pi/2$. Dans ce cas, les déphasages à la réflexion $\phi_1$ et $\phi_2$ tendent vers $\pi$. On a donc :

$$\Delta kd = -\pi \quad (b)$$

Dans le cas d'une dispersion normale, l'indice $n_1$ vu par le faisceau pompe est inférieur à l'indice $n_2$ vu par le faisceau à fréquence double. L'expression de $\Delta k$.

$$\Delta k = 4\pi/\lambda_p (n_1 - n_2) \quad (c)$$

montre que ce paramètre est négatif, et donc que la relation (b) peut effectivement être réalisée par un choix convenable de d. On compense alors le déphasage dû à l'écart à la condition d'accord de phase par les déphasages à la réflexion. On réalise ainsi un accord de phase artificiel.

Dans ce cas, on peut montrer que la longueur effective d'interaction est :

$$l_{eff} = Nd\ 2/\pi$$

Il y a un facteur $2/\pi$ entre la longueur effective et la longueur géométrique parcourue (Nd). De même que dans le cas précédent, la relation (a) autorise d'avoir une résonance simultanée des deux champs au moyen d'une variation de la longueur optique totale du parcours.

D'après l'expression (c), on peut déduire la valeur de d permettant de vérifier la relation (b) :

$$d = \lambda_p / 4(n_1 - n_2)$$

ce qui donne dans notre cas, d = 2,86 $\mu$m.

Connaissant le diamètre de D de la sphère utilisée, on peut alors en déduire le nombre de réflexions N nécessaire, ainsi que l'angle $\Theta$ (figure 13) entre le faisceau de pompe et le dioptre :

$$N \sim \frac{\pi D}{d} \sim \frac{4\pi D (n_1 - n_2)}{\lambda_p}$$

$$\Theta = \frac{d}{D} = \frac{\lambda_p}{4(n_1 - n_2)}$$

Pour une bille de 3 mm de diamètre, on obtient

$$N \sim 3300$$

$$\Theta = 9,5 \times 10^{-4}\ rad$$

Une autre possibilité offerte par ce système consiste à réaliser un accord de phase artificiel pour des champs pompe et signal polarisés selon la même direction. Dans le cas du $LiNbO_3$, on peut ainsi utiliser le coefficient non linéaire le plus important ($d_{33}$) qui nécessite que les deux champs soient polarisés parallèlement à l'axe c.

Dans le cas d'une propagation dans le plan perpendiculaire à cet axe, les deux champs ont alors une polarisation TE. Comme les angles d'incidence des deux faisceaux sont proches de $\pi/2$, les déphasages à la réflexion sont proches de $\pi$. La distance d est donnée par la même expression que dans le cas précédent :

$$d = \lambda_p / 4(n_1 - n_2)$$

Les indices ont pour valeur :

$$n_e (0,82 \, \mu) = 2,17$$
$$n_e (0,41 \, \mu) = 2,32$$

On obtient d = 1,37 $\mu$m

Selon une variante de réalisation, le dispositif de l'invention est réalisé sous la forme d'une demi-sphère. Le faisceau entre dans la demi-sphère comme cela est représenté sur la figure 14 et ressort en un point diamétralement opposé.

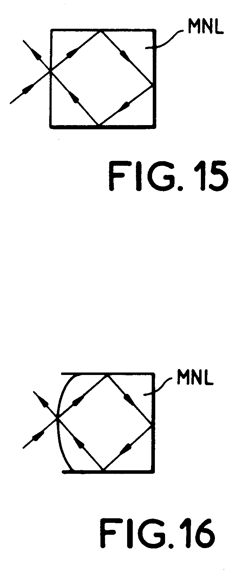

Dans ce qui précède, nous avons décrit des dispositifs dans lesquels les milieux non linéaires MNL possèdent une section de forme circulaire. Cependant, selon une variante de réalisation, cette section est de forme polygonale. Par exemple, comme représenté en figure 15, cette section peut être de forme carrée.

De plus, selon la variante représentée en figure 16, la face d'accès du faisceau est courbe de façon à faciliter le couplage tel que décrit en relation avec la figure 6.

## Revendications

1. Dispositif d'optique non linéaire comportant un milieu en matériau non linéaire (MNL) caractérisé en ce que le matériau non linéaire comporte des moyens de couplage optique permettant à un faisceau de pénétrer et de sertir en un point déterminé du milieu non linéaire, le faisceau se réfléchissant dans le milieu non linéaire plusieurs fois sur les parois de ce milieu non linéaire avant d'en ressortir.

2. Dispositif selon la revendication 1, caractérisé en ce que le matériau non linéaire comporte une section plane, les moyens de couplage permettant l'entrée du faisceau selon cette section plane, celle-ci étant de forme générale polygonale.

3. Dispositif selon la revendication 2, caractérisé en ce que la forme polygonale est carrée.

4. Dispositif selon la revendication 2, caractérisé en ce que la face d'entrée est de forme courbe.

5. Dispositif selon la revendication 1, caractérisé en ce que le matériau non linéaire (MNL) est de forme cylindrique.

6. Dispositif selon la revendication 1, caractérisé en ce que le matériau non linéaire (MNL) est de forme sphérique.

7. Dispositif selon la revendication 1, caractérisé en ce que le milieu non linéaire (MNL) a une forme générale cylindrique dont la paroi sensiblement circulaire est générée par une génératrice courbe.

8. Dispositif selon la revendication 1, caractérisé en ce que le point d'entrée (I) du faisceau extérieur dans le milieu en matériau non linéaire est confondu avec un point de sortie du faisceau après traitement dans ce milieu.

9. Dispositif selon la revendication 8, caractérisé en ce que le point d'entrée (I) comporte un prisme à réflexion totale (PR) couplé au milieu non linéaire (MNL).

10. Dispositif selon la revendication 8, caractérisé en ce que le point d'entrée (I) comporte un réseau (RZ) gravé à la surface du milieu non linéaire (MNL).

11. Dispositif selon la revendication 1, caractérisé en ce que le milieu non linéaire est réalisé sous forme d'une demi-sphère.

FIG.1

FIG.2

FIG.3

**FIG.4**

**FIG.5**

**FIG.6**

pompe $R_Z$

ordre 0

ordre 1

MNL

**FIG.7**

**FIG.8**

plan de propagation

$d = 2R\cos\theta$

$\dfrac{f}{\cos\theta}$

Plan perpendiculaire au plan de propagation

$d = 2R\cos\theta$        $d = 2R\cos\theta$

**FIG.9**

$f\cos\theta$

$R_1$

**FIG.10a**

R

$R_1 > R$

**FIG.10b**

FIG.11

FIG.12

FIG.13

FIG.14

MNL

FIG. 15

MNL

FIG.16

**Office européen des brevets**

# RAPPORT DE RECHERCHE EUROPEENNE

Numero de la demande

EP    92 40 1753

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| X | OPTICS LETTERS. vol. 16, no. 13, 1 Juillet 1991, NEW YORK US pages 992 - 994 D.C. GERSTENBERGER ET AL. 'Efficient second-harmonic conversion of cw single-frequency Nd:YAG laser light by frequency locking to a monolithic ring frequency doubler' * abrégé; figure 1 * | 1-4,8 | G02F1/37 G02F1/39 |
| Y | | 5-7,9,10 | |
| Y | US-A-3 140 451 (A.G. FOX) * colonne 1, ligne 23 - ligne 44 * * colonne 3, ligne 7 - ligne 28 * * revendications 1,4,5; figures 1-4 * | 5-7,9 | |
| A | | 8 | |
| A | GB-A-1 070 570 (WESTERN ELECTRIC COMPANY) * revendications 1-3,12 * | 1,4,6 | |
| Y | US-A-3 725 809 (R. ULRICH ET AL.) * abrégé; figures 1,3 * * colonne 2, ligne 33 - ligne 44 * * colonne 3, ligne 20 - ligne 27 * | 9,10 | **DOMAINES TECHNIQUES RECHERCHES (Int. Cl.5 )** G02F H01S |

Le présent rapport a été établi pour toutes les revendications

| Lieu de la recherche | Date d'achèvement de la recherche | Examinateur |
|---|---|---|
| LA HAYE | 15 OCTOBRE 1992 | Battipede F. |